# DEMANDE DE BREVET EUROPEEN

(11) **EP 2 940 671 A1**
(43) Date de publication de la demande: **04.11.2015**
(21) Numéro de dépôt: 14166245.2
(22) Date de dépôt: 28.04.2014
(51) Int. Cl.: G08G 1/16

(54) **Système et méthode pour détecter des conditions accidentogènes avec une voiture**

(71) Demandeur: OpenTV, Inc., San Francisco, CA 94111 (US)
(72) Inventeur: Chollet, Bertrand, 78310 Maurepas (FR)
(74) Mandataire: Leman Consulting S.A.

(57) **Abrégé**

Dans le but d'anticiper sur conditions pouvant conduire à une accident, il est proposé une une méthode pour détecter des conditions accidentogènes avec un véhicule conduit par un conducteur, ladite méthode comprenant les étapes :
- collecter des données comportementales du véhicule par des capteurs localisés dans le véhicule,
- obtenir une position du véhicule,
- transmettre les données comportementales et la position du véhicule à un centre de contrôle,
- sélectionner au moins une caméra de surveillance du trafic dur la base de la position du véhicule,
- acquérir des images par ladite caméra de surveillance du trafic, ces images comprenant le véhicule,
- transmettre ces images au centre de contrôle,
- analyser les données comportementales pour détecter une condition anormale du conducteur,
- analyser les images pour détecter une condition anormale du véhicule,

dans le cas où les deux analyses détectent une condition anormale, enregistrer ledit véhicule dans une liste d'accident probable.

## Description

### Introduction

Les états ont comme but constant la réduction du nombre d'accident de la route. Pour ce faire, de nombreuses initiatives ont été lancées avec des résultats encourageant. Parmi ces initiatives on trouve des campagnes de sensibilisations du public à la vitesse ou à l'alcool, le renforcement des contrôles et des limitations de vitesse ainsi que l'accroissement de la résistance aux chocs des voitures. Il existe encore bien des moyens visant cet objectif comme la formation des nouveaux conducteurs, l'aménagement des routes etc.

Grâce à ces efforts on constate d'année en année, une réduction des morts et des blessés dus à la route.

Une autre catégorie de moyens ont été développé par les constructeurs de voiture comme complément à la conduite. On trouve dans cette catégorie :
- le BLIS (Blind Spot Information System) qui détecte les objets dans l'angle mort, le système est programmé pour détecter les voitures, mais aussi les motos, de jour comme de nuit. Il est aussi prévu pour ne pas réagir aux voitures garées, aux glissières ou aux barrières.
- le Dynamic Lane Assist. Ce système identifie la position de la voiture par rapport aux lignes de marquage au sol grâce à des caméras. Si le véhicule dévie trop fortement de sa trajectoire idéale, le système envoie au conducteur une mise en garde et le volant corrige de lui-même la trajectoire.
- Le contrôle d'attention. Pour éviter justement que les conducteurs ne s'endorment au volant, les constructeurs ont développé un système de contrôle d'attention qui contrôle les clignements des yeux du conducteur. Une caméra enregistre constamment la fréquence et la durée des mouvements de ses paupières. En comparant les valeurs enregistrées par le système à des données précédemment acquises, le système perçoit les risques d'endormissement et en informe le conducteur au plus vite... en lui indiquant en passant l'aire de repos la plus proche grâce au système de navigation.
- La reconnaissance automatique des panneaux de signalisation. Cela ne vaut presque plus la peine d'apprendre le code de la route avec ce système dont l'affichage numérique informe le conducteur de tous les panneaux de signalisation (en particulier ceux concernant les limitations de vitesse) tout au long de son trajet sur l'autoroute. Une alarme peut indiquer un dépassement de la vitesse reconnue par la caméra embarquée.
- Détection de l'environnement du véhicule. Ce système repose sur une multitude de technologies nécessaires à l'acquisition de multiples données : des caméras, des capteurs radars de pointe, de courtes et longues distances, ainsi que des capteurs lasers. Les informations acquises par les capteurs sont transmises à un calculateur par l'intermédiaire d'un bus de données à contrôle temporel. L'unité informatique fusionne alors les données afin de générer une image de synthèse de l'environnement du véhicule. L'intérêt d'un tel système apparaît clairement dans le cas de l'entrée d'un véhicule sur une autoroute encombrée. Pour évaluer la circulation dans sa globalité, le conducteur devrait normalement se concentrer sur ce qui se passe devant lui tout en se retournant pour s'assurer qu'il n'y a pas de véhicules présents hors du champ de visibilité des rétroviseurs extérieurs. Avec le système de détection de l'environnement, il disposera sur une seule image de la description des différentes voies et de l'ensemble des véhicules qui y circulent.
- Le Dynamic Light Assist. Cet assistant de gestion des feux de route permet au conducteur de ne plus avoir à se préoccuper des feux de route, puisqu'ils sont activés par défaut lorsque la circulation le permet. Certaines voitures passent ainsi automatiquement des feux de route aux feux de croisement et vice-versa, en fonction du trafic venant en sens contraire ou des voitures la précédant.
- Parking assisté et parking automatique. Il permet sur un simple clic de laisser la voiture faire toutes les manoeuvres nécessaires au parcage.
- Détecteur d'alcoolémie. Pour démarrer la voiture, le conducteur doit souffler dans un capteur relié au véhicule qui analyse le taux d'alcoolémie dans l'haleine. Si le taux est au dessus d'un seuil, le véhicule refuse de se mettre en marche.

Ces différents moyens ont prouvé leur efficacité et apportent leur contribution à la baisse des accidents. Néanmoins, cette recherche de baisse est constante et les constructeurs continuent les études dans ce sens.

### Brève description de l'invention

Dans le cadre de la présente demande, il est proposé une méthode pour détecter des conditions accidentogènes avec un véhicule conduit par un conducteur, ladite méthode comprenant les étapes :
- collecter des données comportementales du véhicule par des capteurs localisés dans le véhicule,
- obtenir une position du véhicule,
- transmettre les données comportementales et la position du véhicule à un centre de contrôle,
- sélectionner au moins une caméra de surveillance du trafic dur la base de la position du véhicule,
- acquérir des images par ladite caméra de surveillance du trafic, ces images comprenant le véhicule,
- transmettre ces images au centre de contrôle,
- analyser les données comportementales pour détecter une condition anormale du conducteur,
- analyser les images pour détecter une condition anormale du véhicule,
dans le cas où les deux analyses détectent une condition anormale, enregistrer ledit véhicule dans une liste d'accident probable.

### Brève description de la figure

La présente invention sera mieux comprise grâce à la figure annexée qui illustre les différents éléments intervenant dans l'invention, à savoir un centre de contrôle en communication avec un véhicule et des personnes tierces.

### Description détaillée

Cette invention se base sur l'utilisation conjointe de données comportementales collectées dans le véhicule et de données collectées en dehors du véhicule. Dans la première catégorie, on trouve les capteurs d'attention, de température, de pression (sur le siège), de niveau sonore, pour ce qui concerne le conducteur ainsi que des capteurs propres au véhicule tels que pression des pneus, vibration, température du moteur etc. On peut inclure des capteurs dans le volant qui vont détecter les battements cardiaque du conducteur ou le degré de transpiration.

Ces données peuvent être envoyées au centre de contrôle par les moyens de communication propre au véhicule, par exemple via le téléphone portable intégré au véhicule. En cas d'absence d'un tel téléphone, il est possible de disposer d'une carte SIM uniquement dédiée aux communications de données par le réseau de téléphonie mobile.

Une autre solution est d'utiliser le téléphone portable du conducteur et les données collectées par le véhicule sont transmises au téléphone via Bluetooth. Le téléphone portable servant de relais pour accéder au contre de contrôle.

De la même manière, la position du véhicule peut être acquise par un GPS embarqué et être traitée comme les autres données ou peut être acquise par le GPS du conducteur (faisant partie du téléphone mobile du conducteur).

Ces données comportementales sont de préférence anonymes et sont ensuite analysées afin de détecter une situation anormale. Pour chaque donnée, il est établi une plage qui définit la normalité. Si une des données en en dehors de cette plage, une condition anormale est détectée.

Afin de tenir compte de chaque utilisateur et chaque véhicule, une phase d'initialisation est proposée durant laquelle le véhicule acquiert des données qui sont considérées comme données de référence. Bien entendu, certaines telle que la température ambiante à l'intérieur du véhicule devra être pondérée en fonction de la température extérieure.

La seconde catégorie de données provient de caméras de surveillance du trafic qui analysent en continu les conditions de circulation. Dès que des données d'un véhicule parviennent au centre de contrôle, la position du véhicule permet de déterminer la caméra active dans cette zone. Durant une zone d'initialisation, chaque portion de l'image d'une caméra est associée à une position. Ainsi il sera possible de déterminer quelle région de l'image est supposée contenir le véhicule concerné.

Selon un mode de réalisation, ce n'est qu'une fois qu'une condition anormale a été détectée dans les données comportementales du véhicule que la localisation par une caméra est initié.

Avec la localisation du véhicule, une base de données est accédée afin de retrouver les conditions de trafic dans la zone dans laquelle se trouve le véhicule. Ces données vont indiquer la position d'un stop, d'un feu rouge, la limitation de vitesse, les surfaces de circulation pour chaque sens de trafic etc.

Ainsi les images analysées vont permettre de détecter une situation anormale du véhicule par rapport à son environnement. De plus, selon un mode de réalisation, il est possible de retrouver le type de véhicule sur la base de l'analyse de l'image et d'une base de données contenant un grand nombre de type de véhicule. Un fois ce type connu il est possible de déterminer si le véhicule présente des particularités qui peuvent créer une situation dangereuse, telles qu'un bagage volumineux sur le toit, un pot d'échappement en train de se détacher, une porte ouverte.

L'analyse de ces images permet de déterminer une situation anormale du véhicule dans son environnement. La conjonction d'une situation anormale concernant les données comportementales du véhicule et d'une situation anormale concernant les données environnementales du véhicule déclenche l'enregistrement dudit véhicule dans une liste d'accident probable.

De plus, plusieurs actions peuvent être entreprises par le centre de contrôle :
a) prévenir les services de police et/ou d'urgence,
b) prévenir le conducteur, soit via son téléphone portable ou via le véhicule,
c) prévenir les personnes proches du véhicule.

Dans le registre a), le message de prévention peut contenir d'autres informations telles que le type de situation anormale détectée. Un filtre peut être appliqué pour n'alerter les services d'urgence que si le risque d'accident est élevé. Par exemple, si un objet a été détecté sur le toit du véhicule ceci, n'est pas encore une condition de risque élevé. Par contre, si le véhicule est à contre sens, le risque est élevé.

A cet effet, les conditions de vérification peuvent comporter un degré de priorité associé à chaque paramètre vérifié. Selon le degré de priorité maximal détecté lors de l'analyse, les actions a), b) ou c) sont déclenchées. Il se peut qu'aucune des actions ne soit déclenchée si la priorité est faible bien que des conditions anormales soient détectées. Dans ce cas, l'enregistrement dudit véhicule dans la liste d'accident probable va servir à reconnaître les zones et heures pour lesquels des mesures de prévention doivent être entreprises.

Dans le cas ou il a été décidé de prévenir les services de police et/ou d'urgence, le message transmis va comprendre le maximum d'information pouvant aider à l'intervention. Ceci est bien entendu la position de véhicule, cette position pouvant varier, elle est mise à jour en continu, ainsi que la description de la condition anormale détectée. Ce message peut être accompagné de l'image prise par la caméra pour faciliter d'identification du véhicule.

La prévention du conducteur peut se faire de différents moyens. Le véhicule est un vecteur privilégié pour avertir le conducteur, par un signal sonore et/ou lumineux. Selon le type de condition anormale, par exemple la conduite du véhicule à contre sens ou le franchissement de ligne blanche, il est possible d'actionner l'avertisseur afin de prévenir les véhicules environnants. Ceci peut aussi être utilisé lors de la détection de somnolence.

Pour ce qui est de la troisième catégorie, la généralisation des téléphones intelligents permet de charger une application qui est en communication avec le centre de contrôle. Deux modes sont envisagés, l'un dit à filtre local et l'autre à filtre centralisé. Selon le premier mode, tous les messages d'alerte sont envoyés à tous les appareils en communication avec le centre de contrôle. Ces messages contiennent la position du véhicule concerné et cette position va servir à filtrer les messages afin de ne pas alerter une tierce personne pour rien. La position contenue dans le message est comparée à la position de l'appareil portable de ladite personne et si les deux positions sont proches, le filtre va laisser passer le message. L'utilisateur peut définir les actions qui seront prises, à savoir un signal sonore, une vibration, un signal lumineux ou une combinaison des trois.

Dans le mode dit à filtre central, l'appareil portable (smartphone, tablette, montre connectée) transmet régulièrement sa position au center de contrôle. C'est donc lui qui établi la liste des appareils portables concernés par un message d'alerte pour comparaison de la position du véhicule et de la position de chaque appareil portable. Un message spécifique est donc adressé aux appareils portables dans la zone à proximité du véhicule.

Selon un mode de réalisation, une procédure d'initialisation auprès du centre de contrôle identifie le véhicule par un identifiant. De plus, un appareil portable (ou plusieurs) est associé à cet identifiant et à chaque fois qu'une condition anormale est détectée, le message d'alerte est envoyé à l'appareil portable identifié. Ceci permet de contrôler une flotte de véhicules professionnelle ou sa propre voiture lorsqu'elle est en main d'un tiers.

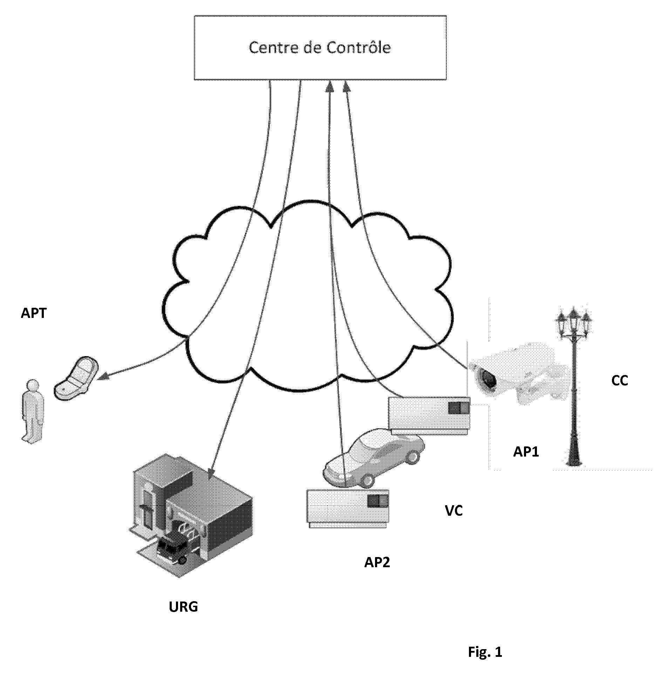

La figure 1 illustre un exemple de réalisation de l'invention. Le center de contrôle est connecté avec le véhicule VC à travers Internet via un réseau mobile. Le véhicule comprend des capteurs AP2 propre aux paramètres du véhicule ainsi que destinés à collecter des données du conducteur. D'autres capteurs AP1 peuvent être placés sur le conducteur, par exemple le téléphone portable du conducteur.

Les images sont acquises par au moins une caméra CC qui va pointer sur un moins une section comprenant le véhicule VC.

Selon le degré de priorité des conditions anormales, il est possible au centre de contrôle d'envoyer un message d'alerter à un centre d'urgence URG. De la même manière, et tel que décrit plus haut, une tierce personne APT se trouvant au alentour du véhicule peut être informée de l'imminence d'un danger.

## Revendications

1. Méthode pour détecter des conditions accidentogènes avec un véhicule conduit par un conducteur, ladite méthode comprenant les étapes :
- collecter des données comportementales du véhicule par des capteurs localisés dans le véhicule,
- obtenir une position du véhicule,
- transmettre les données comportementales et la position du véhicule à un centre de contrôle,
- sélectionner au moins une caméra de surveillance du trafic dur la base de la position du véhicule,
- acquérir des images par ladite caméra de surveillance du trafic, ces images comprenant le véhicule,
- transmettre ces images au centre de contrôle,
- analyser les données comportementales pour détecter une condition anormale du conducteur,
- analyser les images pour détecter une condition anormale du véhicule,
dans le cas où les deux analyses détectent une condition anormale, enregistrer ledit véhicule dans une liste d'accident probable.

2. Méthode selon la revendication 1, selon laquelle le conducteur dispose d'un appareil portable capable de communiquer avec le centre de contrôle, ladite méthode comprenant une étape de transmission par le centre de contrôle d'un message d'alerte audit appareil portable dans le cas où le conducteur est enregistré dans la liste d'accident probable.

3. Méthode selon la revendication 2, dans laquelle l'appareil portable est intégré audit véhicule.

4. Méthode selon la revendication 2, dans laquelle l'appareil portable comprend des moyens de géo-localisation pour déterminer une position courante et est indépendant du véhicule, et dans laquelle le message d'alerte comprend la position du véhicule, l'appareil portable étant sélectionné par une comparaison entre la position du véhicule et la position courante.

5. Méthode selon l'une des revendications 1 à 4, dans laquelle au moins une tierce personne dispose d'un appareil portable tiers comprenant des moyens de géo-localisation déterminant une position tierce, ladite méthode comprenant les étapes de :
- recevoir un message d'alerte contenant la position du véhicule,
- comparaison de la position du véhicule avec la position tierce et si les positions sont proches, envoi à l'appareil portable tiers un signal audio et/ou visuel.

6. Méthode selon l'une des revendications 1 à 5, dans laquelle la détection dune condition anormale du conducteur est déterminée par la comparaison avec des données comportementales de référence du véhicule établies durant une phase d'initialisation.

7. Méthode selon l'une des revendications 1 à 6, dans laquelle la détection d'une condition anormale du véhicule comprend les étapes suivantes :
- extraire d'une base de données, des contraintes routières à proximité de la position du véhicule, la condition anormale du véhicule est détectée si la position du véhicule ne remplit pas les contraintes routières.

8. Méthode selon la revendication 7, dans laquelle une contrainte routière est la vitesse maximale à la position du véhicule ladite méthode comprend les étapes :
- transmettre une vitesse courante du véhicule avec les données comportementales du conducteur,
- comparer la vitesse courante avec la vitesse maximale, une condition anormale étant établie si la vitesse courante est supérieur à la vitesse maximale.

9. Système de détection de conditions accidentogènes d'un véhicule conduit par un conducteur, comprenant un centre de contrôle, des cameras de surveillance du trafic, et des moyens de communication avec un moins un véhicule pour recevoir des données comportementales du véhicule captées par des capteurs, et des moyens pour recevoir une position dudit véhicule, le centre de contrôle comprenant des moyens pour sélectionner au moins une caméra de surveillance sur la base de la position du véhicule et acquérir des images de ladite caméra de surveillance du trafic, ces images comprenant le véhicule, des moyens pour analyser les données comportementales pour détecter une condition anormale du conducteur, et pour analyser les images pour détecter une condition anormale du véhicule, et dans le cas où les deux analyses détectent une condition anormale, des moyens pour enregistrer ledit véhicule dans une liste d'accident probable.

10. Système selon la revendication 9, **caractérisé en ce que** le centre de contrôle comprend des moyens de communication avec un appareil portable dudit conducteur, ledit centre de contrôle comprenant des moyens pour transmettre un message d'alerte audit appareil portable dans le cas où le véhicule est enregistré dans la liste d'accident probable.

11. Système selon la revendication 9 ou 10, **caractérisé en ce que** le centre de contrôle comprend des moyens pour recevoir une position d'un appareil portable tiers, et des moyens pour comparer cette position avec la position dudit véhicule et pour transmettre un message d'alerte audit appareil tiers si les positions sont proches.

12. Système selon l'une des revendications 9 à 11, **caractérisé en ce qu'**il comprend des moyens pour détecter une condition anormale du véhicule par l'extraction d'une base de données, des contraintes routières à proximité de la position du véhicule, la condition anormale du véhicule est détectée si la position du véhicule ne remplit pas les contraintes routières.

13. Système selon l'une des revendications 9 à 12, **caractérisé en ce qu'**il comprend des moyens pour transmettre un message d'alerte à un service d'urgence.
